# EUROPÄISCHE PATENTSCHRIFT

(11) **EP 0 859 713 B1**
(45) Veröffentlichungstag und Bekanntmachung des Hinweises auf die Patenterteilung: **18.09.2002**
(21) Anmeldenummer: 96939100.2
(22) Anmeldetag: 18.11.1996
(51) Int. Cl.: B60T 8/34, B60T 17/22

(54) **HYDRAULISCHE KRAFTFAHRZEUGBREMSANLAGE MIT RADSCHLUPFREGELUNG**
HYDRAULIC VEHICLE BRAKE SYSTEM WITH WHEEL SLIP CONTROL
SYSTEME DE FREINAGE HYDRAULIQUE POUR AUTOMOBILE A REGULATION ANTIPATINAGE

(30) Priorität: 18.11.1995 DE 19543124; 19.07.1996 DE 19629135
(43) Veröffentlichungstag der Anmeldung: 26.08.1998
(73) Patentinhaber: Continental Teves AG & Co. oHG, 60488 Frankfurt (DE)
(72) Erfinder: AUMÜLLER, Ralf, D-60437 Frankfurt am Main (DE); CZARNETZKI, Edwin, D-65604 Elz (DE); HOFER, Norbert, D-61440 Oberursel (DE); SCHMITT, Stefan, D-63867 Johannesberg (DE); THÜRMER, Frank, D-55126 Mainz (DE); VOLZ, Peter, D-64291 Darmstadt (DE); VON ZEDDELANN, Volker, D-64287 Darmstadt (DE)
(86) Internationale Anmeldenummer: EP9605085
(87) Internationale Veröffentlichungsnummer: WO97018977

(56) Entgegenhaltungen:
- WO-A-93/19960
- DE-A- 3 816 748
- DE-A- 3 935 946
- DE-A- 4 010 842
- DE-A- 4 132 471
- DE-A- 4 201 826
- DE-A- 4 215 706
- DE-A- 4 240 065
- DE-A- 4 320 391
- DE-A- 4 329 900
- DE-A- 4 337 133

## Beschreibung

Die Erfindung betrifft eine hydraulische Kraftfahrzeugbremsanlage mit Radschlupfregelung nach dem Oberbegriff der Patentansprüche 1 und 7.

Aus der DE 4337133A1 ist bereits eine hydraulische Kraftfahrzeugbremsanlage mit Radschlupfregelung hervorgegangen, bei der in der Blockierschutzeinrichtung und/oder Antriebsschlupfregeleinrichtung je Bremskreis mindestens ein Rückschlagventil verwendet wird, dessen Ventilsitz beim Evakuieren der Bremsanlage vom Schließkörper des Rückschlagventils nicht abgeschlossen ist. Durch diese Maßnahme soll erreicht werden, daß der Ventilsitz vor und bei dem Befüllen des Systems bei drucklosem Zustand des Aggregates nicht abgedeckt ist. Durch das offene Rückschlagventil besteht somit eine Verbindung zwischen dem Primär- und dem Sekundärkreis, wodurch jeweils der Sekundärkreis mit Flüssigkeit evakuiert und gefüllt werden kann, ohne daß jeweils das stromlos geschlossenen Magnetventil angesteuert werden muß. Als Schließkörper weist das Rückschlagventil eine federlose Kugel auf, so daß bei einem Druckaufbau im Aggregat anläßlich einer Bremsung entsprechend große Strömungskräfte auf das Rückschlagventil einwirken müssen, damit der als Kugel ausgebildete Schließkörper mitgerissen und auf den Ventilsitz gepreßt wird. Eine andere Bauart des Kugelrückschlagventils sieht vor, daß die Kugel durch Schwerkraftwirkung auf ihren Ventilsitz gepreßt werden soll. Diese Überlegungen sind jedoch im wesentlichen theoretischer Natur, so daß im Praxisfall nicht ausgeschlossen ist, daß die durch Strömungskräfte bzw. durch Schwerkraft zu bewerkstelligende Schließbewegung des Kugelrückschlagventils sicher zustande kommt. Infolge der hohen Dichtigkeitsanforderung an das Rückschlagventil, die mit der Dichtigkeitsanforderung eines in den Auslaß zur Radbremse geschalteten, in der Grundstellung geschlossenen Druckmodulationsventils vergleichbar ist, ist in jedem Falle ein absolut sicheres Schließen des Rückschlagventils sicherzustellen. Eine leckagefreie Schließfunktion von metallischen Kugelschließkörpern ist jedoch bekanntlich nicht gewährleistet.

Aus der DE-A-4 320 391 ist eine hydraulische Kraftfahrzeugbremsanlage mit Radschlupfregelung bekannt, mit einem Rückschlagventil, dessen Schließkörper in der Grundstellung eine hydraulische Verbindung zwischen dem nicht betätigten Bremsdruckgeber und dem Saugpfad einer Pumpe herstellt. Bei Betätigung des Bremsdruckgebers trennt das Rückschlagventil hydraulisch aktiviert den Bremsdruckgeber von der Pumpe, sodaß die Verbindung der Pumpensaugseite mit dem Bremsdruckgeber und der Radbremse nur über ein in Grundstellung normalerweise geschlossenes, jedoch in der Bremsschlupfregelung offenes Druckmodulationsventil hergestellt werden kann.

Ferner wird in der DE-A-38 16 748 ein federndes Rückschlagventil vorgestellt, dessen Schließkörper mit einem elastomeren Dichtelement versehen ist, wobei das Rückschlagventil in einer äußeren Wand eines Ventilaufnahmekörpers angeordnet ist, um bei einer Drucküberhöhung in einem der das Rückschlagventil zu beiden Seiten begrenzenden Kanälen in Öffnungsrichtung einen Druckausgleich herzustellen.

In der gattungsbildenden DE-A-41 32 471 wird ein in Grundstellung geschlossenes Druckmodulationsventil für eine Kraftfahrzeugbremsanlage mit Radschlupfregelung vorgestellt, das zum Druckausgleich zwischen der Saugleitung einer Pumpe und dem zur Radbremse führenden Bremsdruckpfad ein in Richtung des Bremsdruckpfads öffnendes Rückschlagventil in Form einer Rückschlagmanschette aufweist, die am Druckmodulationsventil angebracht ist und sich mit dem Druckmodulationsventil in eine Sackbohrung eines Aufnahmekörpers erstreckt.

Daher ist es die Aufgabe der Erfindung, eine hydraulische Kraftfahrzeugbremsanlage mit Radschlupfregelung der eingangs genannten Art dahingehend zu verbessern, daß mit einfachen Mitteln ein kostengünstiges, funktionssicheres, insbesondere leckagefreies Rückschlagventil zustande kommt, das bei Bedarf eine Selbstentleerung des Niederdruckspeichers und eine Evakuierung des Pumpensaugpfades während des Hochvakuumprozesses selbsttätig ermöglicht.

Diese Aufgabe wird erfindungsgemäß für eine hydraulische Kraftfahrzeugbremsanlage der angegebenen Gattung durch die kennzeichnenden Merkmale der Patentansprüche 1 und 7 gelöst.

Weitere Merkmale und Vorteile der Erfindung gehen nachfolgend anhand der Beschreibung mehrerer Ausführungsbeispiele hervor.

Es zeigen:
- Fig. 1: einen Hydraulikschaltplan für eine Kraftfahrzeubremsanlage mit Radschlupfregelung, mit einer konstruktiven Darstellung des Rückschlagventils,
- Fig. 2: eine Ausführungsform des Rückschlagventils in koaxialer Anordnung zu einem in Grundstellung geschlossenen Druckmodulationsventil,
- Fig. 3: das Rückschlagventil als Manschettenrückschlagventil in Patronenbauweise, mit Selbstverstemmbefestigung
- Fig. 4: das Rückschlagventil als Manschettenventil in Patronen bauweise, formschlüssig vom Druckmodulationsventilgehalten,

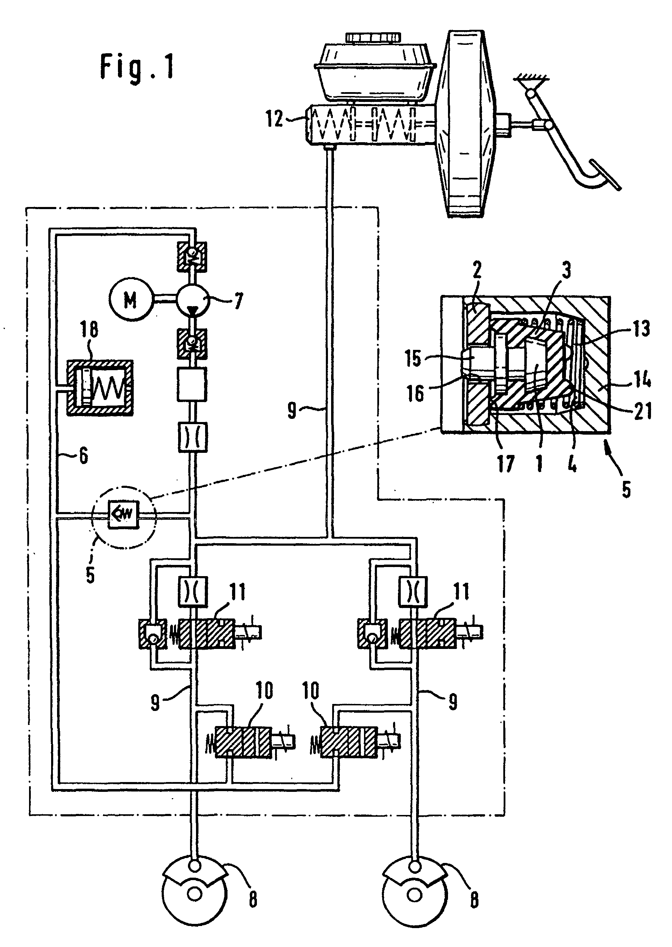

Die Fig. 1 zeigt den Hydraulikschaltplan für eine hydraulische Kraftfahrzeugbremsanlage mit Radschlupfregelung, die nach dem Rückförderprinzip arbeitet. Ein an einen Bremsdruckgeber 12 angeschlossener Bremsdruckpfad 9 verzweigt sich auf zwei Radbremsen 8, wobei in die Abzweigungen des Bremsdruckpfades 9 in der Grundstellung elektromagnetisch nicht erregte, offene Druckmodulationsventile 11 eingesetzt sind. Dieser hydraulische Abschnitt der Bremsanlage soll im nachfolgenden mit dem Begriff "Primärkreis" umschrieben werden. Zwischen den in der Grundstellung geöffneten Druckmodulationsventilen 11 und den Radbremsen 8 sind an den Bremsdruckpfaden 9 in der Grundstellung geschlossene Druckmodulationsventile 10 angeordnet, die mit einem Saugpfad 6 einer Pumpe 7 in Verbindung stehen. Am Saugpfad 6 schließt sich eine mit dem Bremsdruckpfad 9 verbundene Bypassleitung an, die das Rückschlagventil 5 aufnimmt. Der Schließkörper 1 des Rückschlagventils 5 ist in Sperrichtung von einer Feder 4 beaufschlagt, so daß das Rückschlagventil 5 eine hydraulische Verbindung ausschließlich vom Saugpfad 6 zum Bremsdruckpfad 9 ermöglicht. Zwischen dem Anschluß des Rückschlagventils 5 an den Saugpfad 6 und der Pumpe 7 befindet sich im Nebenschluß ein Niederdruckspeicher 18. Der von den in der Grundstellung geschlossenen Druckmodulationsventile 10 zur Pumpe 7 führende Hydraulikabschnitt wird im nachfolgenden mit dem Begriff "Sekundärkreis" beschrieben. Die Pumpe 7 ist sowohl mit einem schematisch skizzierten Saug- als auch Druckventil versehen und steht über eine nachgeschaltete Geräuschdämpfungseinrichtung mit dem Bremsdruckpfad 9 in Verbindung. Konstruktive Einzelheiten des im Hydraulikschaltplan symbolisch dargestellten Rückschlagventils 5 gehen aus einer aus dem Hydraulikschaltplan herausgestellten Abbildung der Konstruktion hervor. Hierbei ist das Rückschlagventil 5 in einer Sacklochbohrung 13 eines Aufnahmekörpers 14 angeordnet, der sowohl in Patronenbauweise als separat in einen Ventilblock befestigtes Einsatzteil ausgeführt sein kann, als auch unmittelbar im Aufnahmekörper 14 eines jeden in der Grundstellung geschlossenen Druckmodulationsventils 10 stromabwärts eingesetzt werden kann. Das Rückschlagventil 5 weist zwischen einem vorzugsweise metallischen Schließkörper 1 und einem metallischen Ventilsitzkörper 2 ein elastomeres Dichtelement 3 auf, das den Schließkörper 1 kappenförmig umgreift. Am Schließkörper 1 ist ferner eine unter Druckbeanspruchung stehende Feder 4 angeordnet, die das Rückschlagventil 5 normalerweise in seiner geschlossenen Grundstellung am Ventilsitzkörper 2 hält. Der Schließkörper 1 weist einen Zapfen 15 auf, der in einer Druckmitteldurchtrittsbohrung 16 eines die Sacklochbohrung 13 verschließenden Ventilsitzkörpers 2 spielbehaftet geführt ist. Unter Wirkung der Feder 4 liegt das topfförmige, elastomere Dichtelement 3 mit seiner Dichtlippe 17 an einer scheibenförmigen Dichtfläche des Ventilsitzkörpers 2 an, der in der Sacklochbohrung 13 des Aufnahmekörpers 14 mittels einer Verstemmung befestigt ist. Hierdurch ist in der gezeigten Abbildung der Sekundärkreis abgetrennt durch elektrisch und hydraulisch schaltbare Ventile als isolierter Bereich im Hydrauliksystem anzusehen. Nach der Erfindung ist somit je Bremskreis stromabwärts zu den in der Grundstellung normalerweise geschlossenen Druckmodulationsventilen 10 an den Sekundärkreis ein in Richtung des Primärkreises gegen eine Feder 4 öffnendes Rückschlagventil 5 angeordnet. Während der Evakuierung des Sekundärkreises hebt durch die Wirkung einer Vakuumquelle am Primärkreis, der Schließkörper 1 vom Ventilsitzkörper 2 ab, sobald die Druckdifferenz zwischen Primär- und Sekundärkreis die relativ schwache Feder 4 mit ca. 50 mbar Öffnungsdruck überwunden hat. In der Offenstellung des Schließkörpers 1 kann sich das über eine Kanalverbindung in der Sacklochbohrung 13 anstehende Vakuum zwangsläufig zwischen der Dichtlippe 17 und der Druckmitteldurchtrittsbohrung 16 in den Sekundärkreis fortpflanzen und die Evakuierung des Sekundärkreises zu ca. 95% ermöglichen. Bei Beendigung des Evakuierungsprozesses gelangt der Schließkörper 1 unter Wirkung der Feder 4 sicher auf Anlage am Ventilsitzkörper 2, so daß sowohl zu Beginn als auch am Ende des hydraulischen Befüllvorganges der Primärkreis mit Bremsflüssigkeit vollständig gefüllt ist und im Sekundärkreis ein unverändertes Vakuum wirksam ist. Dieser Zustand des Sekundärkreises bleibt so lange erhalten, bis Bremsflüssigkeit des Primärkreises durch elektromagnetische Betätigung des in der Grundstellung geschlossenen Druckmodulationsventils 10 bei einer Radschlupfregelfunktion in den Sekundärkreis einströmt und diesen befüllt. Die normalen Funktionen des Bremssystems, so z.B. die radschlupffreie Normalbremsung als auch der Radschlupfregelfall werden durch den über das Rückschlagventil 5 abgetrennten Bypass zwischen Sekundär- und Primärkreis nicht beeinflußt, da in allen Fällen der hydraulische Druck im Primärkreis höher als im Sekundärkreis ist und das Rückschlagventil 5 unter Wirkung der Feder 4 steht. Außer dieser einmaligen Aufgabe des Rückschlagventils 5, während des Hochvakuumprozesses an der Montagelinie beim Fahrzeughersteller die Evakuierung des Sekundärkreises selbsttätig zu ermöglichen, ist es eine weitere Funktion des Rückschlagventils 5, den Niederdruckspeicher 18 in Richtung des Primärkreises selbst zu entleeren. Der ansonsten übliche Pumpen-Nachlaufzyklus zur Gewährleistung einer vollständigen Entleerung des Niederdruckspeichers 8 vor Beginn einer Radschlupfregelung, kann deshalb entfallen. Die vorgeschlagene Konstruktion des Rückschlagventils 5 weist gegenüber dem Stand der Technik maßgebliche Vorteile auf. Hierzu gehört die Unempfindlichkeit des elastomeren Dichtelementes 3 gegenüber Verschmutzungen im Hydraulikkreis, so daß keine speziellen Filtermaßnahmen erforderlich sind. Ein weiterer Vorteil ist in der absolut sicheren Abdichtung des Schließkörpers 1 am Ventilsitzkörper 2 zu sehen, die einerseits durch die Verwendung eines elastomeren Dichtelementes (Werkstoff), andererseits in der speziellen Ausgestaltung des Dichtelementes 3 mit einer Dichtlippe 17 zu sehen ist, die unter der Wirkung der Feder 4 ringförmig auf den Ventilsitzkörper 2 gepreßt ist. Der Ventilsitzkörper 2 übernimmt gleichzeitig eine verschlußfunktion der Sacklochbohrung 13, die sich besonders einfach mittels einer Verstemmung des Ventilsitzkörpers 2 im Aufnahmekörper 14 herstellen läßt. Durch die Feder 4 ist nicht nur ein unerwünschtes Füllen des Druckspeichers 18 mit Fluid des Primärkreises wähend einer Normalbremsung verhindert, sondern auch eine Teilevakuierung des Sekundärkreises möglich.

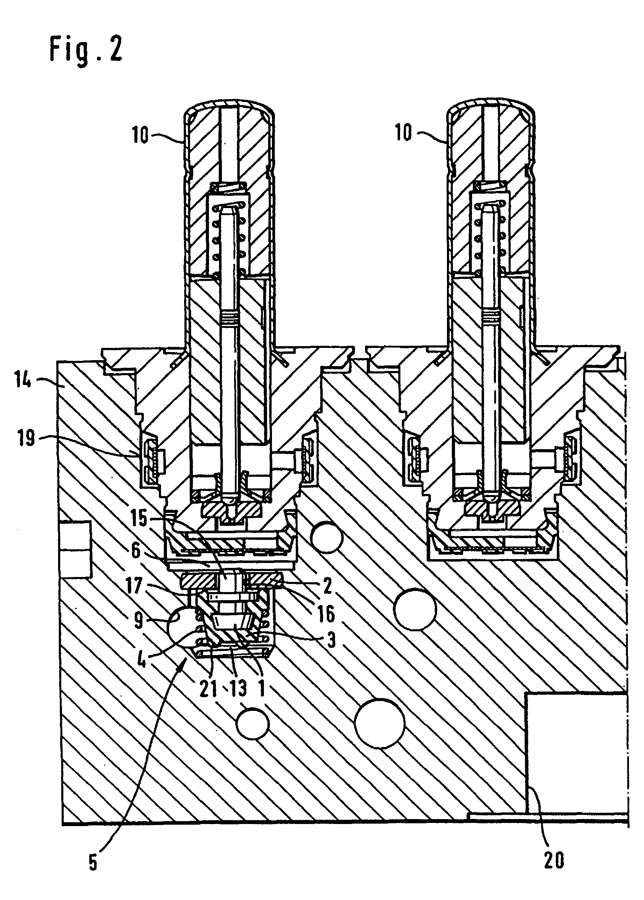

Die Fig. 2 zeigt eine vorteilhafte Anordnung des Rückschlagventils 5 innerhalb eines Aufnahmekörpers 14 für die Druckmodulationsventile 10,11. Als besonders günstiger Einbauort für das Rückschlagventil 5, erweist sich die im Aufnahmekörper 14 vorgesehene Stufenbohrung 19 des in Grundstellung geschlossene Druckmodulationsventil 10. Durch die koaxiale Ausrichtung der Sacklochbohrung 13 am Ende zur Stufenbohrung 19 ist nämlich eine einfache Herstellung in einem Zerspanungsvorgang mit einer günstigen Plazierung für das Rückschlagventil 5 geschaffen, so daß der Aufnahmekörper 14 automatengerecht ausgelegt ist. Der in Fig. 2 dargestellte Aufnahmekörper 14 nimmt in zwei parallelen Ventilreihen die Druckmodulationsventile 10,11 auf. Auf der von der Stufenbohrung 19 abgewandten Gehäusekörperseite befindet sich eine weitere Stufenbohrung 20 im Halbschnitt, die für die Aufnahme eines die Pumpe antreibenden Elektromotors vorgesehen ist. Die in Fig. 2 nicht dargestellte Pumpe 7 befindet sich zwangsläufig quer zu den Stufenbohrungen 19,20 im Aufnahmekörper 14. Der Aufnahmekörper 14 ist gleichfalls entlang seiner Symmetrielinie im Halbschnitt dargestellt, so daß auf der rechten Seite zur Symmetrielinie des Aufnahmekörpers 14 eine identische Funktionsgruppenanordnung vorzufinden ist.

Soweit nicht auf alle Einzelheiten des Rückschlagventils 5 in Fig. 2 eingegangen ist, so entsprechen dennoch die abbildungsgemäßen Merkmale den zu Fig. 1 beschriebenen Konstruktionseinzelheiten des Rückschlagventils 5.

Ergänzend zu den in Fig. 1 und 2 dargestellten konstruktiven Ausführungsformen des Rückschlagventils 5, wird auf den am Dichtelement 3 angeformten Noppen 21 hingewiesen, der dafür sorgt, daß in der Offenstellung des Rückschlagventils 5 ein genügend großer Abstand zwischen der Stirnfläche der Sackbohrung 13 und der Stirnfläche am Dichtelement 3 verbleibt, um beim Eintritt von Bremsflüssigkeit in die Sacklochbohrung 13 den hydraulischen Druck des Primärkreises im Schließsinne des Rückschlagventils 5 wirken zu lassen.

Die Fig. 2 zeigt zu jeweils einem Paar in der Grundstellung geschlossenen Druckmodulationsventilen 10 ein Rückschlagventil 5. Bei einer Veränderung des hydraulischen Bremskreises kann jedoch bei Bedarf auch jedem einzelnen, in der Grundstellung geschlossene Druckmodulationsventil 10 ein Rückschlagventil 5 zugeordnet sein.

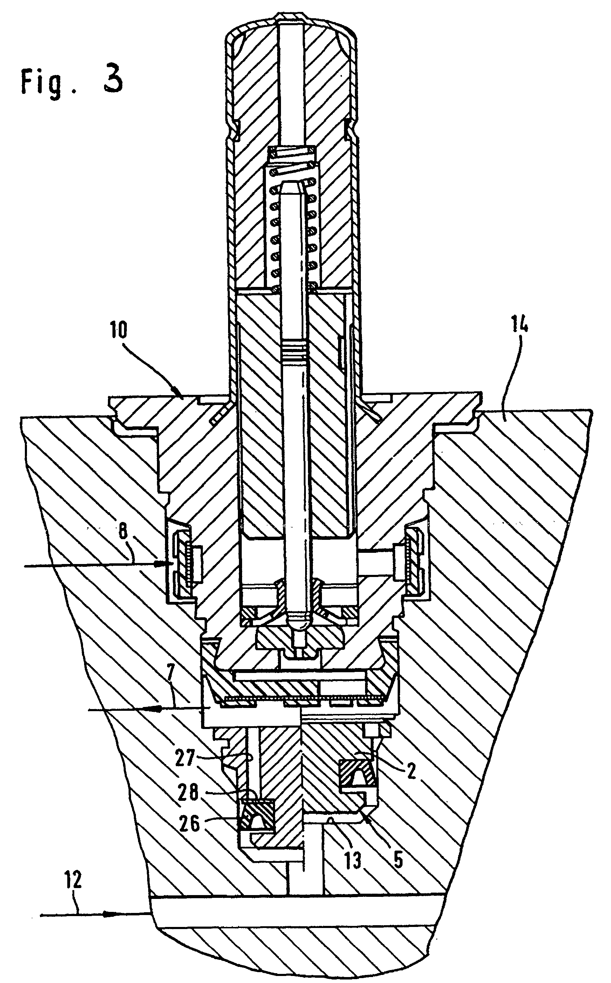

Die Fig. 3 zeigt die voran beschriebene Ventilbaugruppe in aufgelöster Bauform, indem der Patroneneinsatz des Rückschlagventils 5 losgelöst vom Druckmodulationsventils 10, beispielsweise mittels einer sog. Selfclinching- Verbindung, in der Sacklochbohrung 13 befestigt ist. Weiterhin unterscheidet sich das Rückschlagventil 5 von der bisherigen Ausführungsform durch die Verwendung einer Manschettendichtung 26 anstelle bisher vorgeschlagener, durch Federkraft beaufschlagter Sitzventile. Dies hat den Vorteil, daß durch entsprechende Dichtlippenvorspannkraft auf die Verwendung einer separat zu plazierenden Feder 4 verzichtet werden kann. Im vorliegenden Beispiel ähnelt der Patroneneinsatz mehr einem verjüngten Dichtstopfen, der mit einer Ringnut zur Aufnahme einer Ringmanschette versehen ist. Deren Dichtungslippe drückt unter Wirkung der Eigenspannung gegen die Wandung der Sacklochbohrung 13 die quasi die Funktion eines Ventilsitzkörpers übernimmt. Zum Evakuieren und Befüllen des sich stromabwärts zum Druckmodulationsventil 10 in Richtung der Pumpe 7 erstreckenden Sekundärkreises öffnet die Manschettendichtung 26 in Richtung des unterhalb der Sacklochbohrung 13 angeschlossenen Kanals, der mit dem Bremsdruckgeber 12 verbunden ist. Der Patroneneinsatz weist einen Kanal 27 auf, der sich bis hinter die Schulter der Manschettendichtung 26 erstreckt und über einen Zwischenraum der beiden Ventilbaugruppen mit der Saugseite der Pumpe 7 verbunden ist. Vorzugsweise befindet sich zwischen der Manschettendichtung 26 und der vom Kanal 27 begrenzten Nutflanke eine Füllscheibe 28.

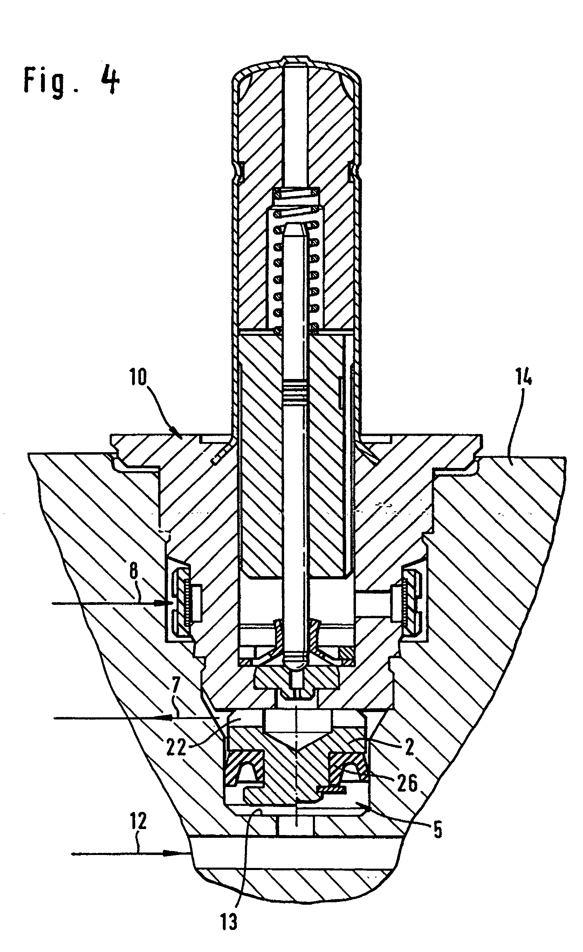

In Fig. 4 wird gleichfalls für die Funktion des Rückschlagventils 5 eine Manschettendichtung 26 an einem Patroneneinsatz vorgeschlagen, der sich an der in die Sacklochbohrung 13 gerichteten Stirnfläche des gleichfalls als Patrone in den Aufnahmekörper 14 eingestemmten Druckmodulationsventils 10 abstützt. Der Patroneneinsatz weist ein Radialspiel in der Sacklochbohrung 13 auf, wodurch der Radialspalt und damit die Verbindung zwischen der Saugseite der Pumpe 7 und dem am Bremsdruckgeber 12 angeschlossenen Bremsdruckpfad 9, unter Wirkung der Lippenvorspannkraft unterbrochen wird, solange der Sekundärkreis der Bremse nicht evakuiert wird.

Die vorgestellten Ausführungsbeispiele zeigen alle zweckmäßige Lösungsvarianten der Erfindung, die im Hinblick auf ein einfach und sicher herstellbares, prüf- und montagefähiges Rückschlagventil 5 zum Evakuieren des Sekundärkreises einer Bremsanlage geeignet sind. Im besonderen wird auf die verringerte Verschmutzungsgefahr der Kanäle hingewiesen, die sich bei Verwendung von Spielpassungen für die Montage der Patroneneinsätze
-sowohl für die Rückschlagventilbaugruppe als auch für das Druckmodulationsventil 10- ergibt.

### Bezugszeichenliste

- 1: Schließkörper
- 2: Ventilsitzkörper
- 3: Dichtelement
- 4: Feder
- 5: Rückschlagventil
- 6: Saugpfad
- 7: Pumpe
- 8: Radbremse
- 9: Bremsdruckpfad
- 10: Geschlossenes Druckmodulationsventil
- 11: Geöffnetes Druckmodulationsventil
- 12: Bremsdruckgeber
- 13: Sacklochbohrung
- 14: Aufnahmekörper
- 15: Zapfen
- 16: Druckmitteldurchtrittsbohrung
- 17: Dichtlippe
- 18: Niederdruckspeicher
- 19: Stufenbohrung
- 20: Stufenbohrung
- 21: Noppen
- 22: Querkanal
- 23: Verbindungskanal
- 24: Ringdichtung
- 25: Stützscheibe
- 26: Manschettendichtung
- 27: Kanal
- 28: Füllscheibe

## Patentansprüche

1. Hydraulische Kraftfahrzeugbremsanlage mit Radschlupfregelung, mit mindestens einem in einer Sacklochbohrung (13) eines Aufnahmekörpers (14) angeordneten Rückschlagventil (5), dessen Schließkörper (1) beim Evakuieren der Bremsanlage von seinem Ventilsitzkörper (2) abgehoben ist, mit einem an einer Pumpe (7) angeschlossenen Saugpfad (6), der mit einem Bremsdruckpfad (9) in Verbindung steht, wenn der Schließkörper (1) des Rückschlagventils (5) beim Evakuieren der Bremsanlage vom Ventilsitzkörper (2) abgehoben ist, mit einem Bremsdruckgeber (12) und einer Radbremse (8), die über den Bremsdruckpfad (9) miteinander verbunden sind, mit einem Druckmodulationsventil (10), das in seiner geschlossenen Grundstellung die Radbremse (8) vom Saugpfad (6) sowie von einem am Saugpfad (6) angeschlossenen Niederdruckspeicher (18) und der Pumpe (7) trennt, wobei zwischen dem Schließkörper (1) und dem Ventilsitzkörper (2) ein elastomeres Dichtelement (3) angeordnet ist, **dadurch gekennzeichnet, daß** der Ventilsitzkörper (2) mittels einer Verstemmung in der das Rückschlagventil (5) aufnehmenden Sacklochbohrung (13) befestigt ist, daß der Schließkörper (1) mit einem Zapfen (15) versehen ist, der in einer Druckmitteldurchtrittsbohrung (16) des die Sacklochbohrung (13) verschließenden Ventilsitzkörpers (2) spielbehaftet geführt ist, daß am elastischen, topfförmigen Dichtelement (3) eine Feder (4) aufgesetzt ist, die in der geschlossenen Grundstellung des Rückschlagventils (5) das Dichtelement (3) mit seiner Dichtlippe (17) an einer scheibenförmigen Dichtfläche des Ventilsitzkörpers (2) hält, daß die Dichtlippe (17) zur Evakuierung des Saugpfades (6) unter der Wirkung einer Vakuumquelle auf den Bremsdruckpfad (9) beim Erreichen eines durch die Feder (4) definierten Ventilöffnungsdrucks entgegen der Schließwirkung der Feder (4) vom Ventilsitzkörper (2) abgehoben ist, und daß am Dichtelement (3) ein Noppen (21) vorgesehen ist, durch den in der Offenstellung des Rückschlagventils (5) ein definierter Abstand zwischen der Stirnfläche der Sackbohrung (13) und der Stirnfläche des Dichtelements (3) eingestellt ist, um beim Eintritt von Bremsflüssigkeit in die Sacklochbohrung (13) den hydraulischen Druck im Bremsdruckpfad (9) im Schließsinn des Rückschlagventils (5) wirken zu lassen.

2. Hydraulische Kraftfahrzeugbremsanlage nach Anspruch 1, **dadurch gekennzeichnet, daß** der zur Radbremse (8) führende Bremsdruckpfad (9) zwischen einem in der Grundstellung geöffneten Druckmodulationsventil (11) und einem Bremsdruckgeber (12) an eine hydraulische Verbindung zum Rückschlagventil (5) angeschlossen ist.

3. Hydraulische Kraftfahrzeugbremsanlage nach Anspruch 1 oder 2, **dadurch gekennzeichnet, daß** das Rückschlagventil (5) in der Sacklochbohrung (13) des Aufnahmekörpers (14) angeordnet ist, der ein in der Grundstellung geschlossenen Druckmodulationsventil (10) aufnimmt.

4. Hydraulische Kraftfahrzeugbremsanlage nach Anspruch 3, **dadurch gekennzeichnet, daß** das Rückschlagventil (5) in Patronenbauweise in der Sacklochbohrung (13) befestigt ist.

5. Hydraulische Kraftfahrzeugbremsanlage nach Anspruch 3, **dadurch gekennzeichnet, daß** das Rückschlagventil (5) integrales Bestandteil des Druckmodulationsventils (10) ist.

6. Hydraulische Kraftfahrzeugbremsanlage Anspruch 1, **dadurch gekennzeichnet, daß** das Rückschlagventil (5) koaxial zur Sacklochbohrung (13) des in dem Aufnahmekörper (14) eingesetzten Druckmodulationsventils (10) ausgerichtet ist.

7. Hydraulische Kraftfahrzeugbremsanlage mit Radschlupfregelung, mit mindestens einem Rückschlagventil (5), dessen Schließkörper (1) beim Evakuieren der Bremsanlage von seinem Ventilsitzkörper (2) abgehoben ist, mit einem an einer Pumpe (7) angeschlossenen Saugpfad (6), der mit einem Bremsdruckpfad (9) in Verbindung steht, wenn der Schließkörper (1) des Rückschlagventils (5) beim Evakuieren der Bremsanlage vom Ventilsitzkörper (2) abgehoben ist, mit einem Bremsdruckgeber (12) und einer Radbremse (8), die über den Bremsdruckpfad (9) miteinander verbunden sind, mit einem Druckmodulationsventil (10), das in seiner geschlossenen Grundstellung die Radbremse (8) vom Saugpfad (6) sowie von einem am Saugpfad (6) angeschlossenen Niederdruckspeicher (18) und der Pumpe (7) trennt, wobei der Schließkörper aus einer Manschettendichtung (26) gebildet ist, und wobei der Ventilsitzkörper durch den Ringbereich einer von der Manschettendichtung (26) kontaktierten Sacklochbohrung (13) eines Aufnahmekörpers (14) gebildet ist, **dadurch gekennzeichnet, daß** das Rückschlagventil (5) als eigenständige Baugruppe in Patronenbauweise in der Sacklochbohrung (13) befestigt ist, daß ein Kanal (27) vorgesehen ist, der sich bis zur Schulter der Manschettendichtung (26) erstreckt und der über einen Zwischenraum zwischen sich und dem in die Aufnahmebohrung (14) eingesetzten Druckmodulationsventil (10) mit der Saugseite der Pumpe (7) verbunden ist.

## Claims

1. Hydraulic automotive vehicle brake system with wheel slip control which includes at least one non-return valve (5) that is arranged in a blind-end bore (13) of an accommodating member (14) and has a closure member (1) that is lifted from its valve seat member (2) during evacuation of the brake system, a suction conduit (6) connected to a pump (7) and being in communication with a braking pressure conduit (9) when the closure member (1) of the non-return valve (5) has lifted from the valve seat member (2) during evacuation of the brake system, a braking pressure generator (12) and a wheel brake (8) which are interconnected by way of the braking pressure conduit (9), a pressure modulation valve (10) which, in its closed basic position, isolates the wheel brake (8) from the suction conduit (6) as well as from a low-pressure accumulator (18) connected to the suction conduit (6) and from the pump (7), with an elastomeric sealing elment (3) being interposed between the closure member (1) and the valve seat member (2),
**characterized in that** the valve seat member (2) is attached by being wedged into the blind-end bore (13) that accommodates the non-return valve (5), **in that** the closure member (1) includes a pin (15) which is guided with play in a pressure fluid passage bore (16) of a valve seat member (2) that closes the blind-end bore (13), **in that** a spring (4) is mounted onto the elastic bowl-shaped sealing element (3) and, in the closed basic position of the non-return valve (5), maintains the sealing element (3) with its sealing lip (17) on a plate-shaped sealing surface of the valve seat member (2), **in that** the sealing lip (17), for the evacuation of the suction conduit (6), under the effect of a vacuum source towards the braking pressure conduit (9), is lifted from the valve seat member (2) in opposition to the closing effect of spring (4) when a valve opening pressure defined by spring (4) is reached, and **in that** a knub (21) is provided on the sealing element (3) which ensures that, in the open position of the non-return valve (5), a defined distance is set between the end surface of the blind-end bore (13) and the end surface on the sealing element (3) in order that the hydraulic pressure in the braking pressure conduit (9) will act in the sense of closing the non-return valve (5) when brake fluid enters the blind-end bore (13).

2. Hydraulic automotive vehicle brake system as claimed in claim 1,
**characterized in that** the braking pressure conduit (9) which leads to the wheel brake (8) is connected to a hydraulic connection to the non-return valve (5) between a pressure modulation valve (11) which is open in its basic position and a braking pressure generator (12).

3. Hydraulic automotive vehicle brake system as claimed in claim 1 or claim 2,
**characterized in that** the non-return valve (5) is arranged in the blind-end bore (13) of the accommodating member (14) which accommodates a pressure modulation valve (10) that is closed in its basic position.

4. Hydraulic automotive vehicle brake system as claimed in claim 3,
**characterized in that** the non-return valve (5) is configured as a cartridge-type construction and attached in the blind-end bore (13).

5. Hydraulic automotive vehicle brake system as claimed in claim 3,
**characterized in that** the non-return valve (5) is an integral component of the pressure modulation valve (10).

6. Hydraulic automotive vehicle brake system as claimed in claim 1,
**characterized in that** the non-return valve (5) is aligned coaxially to the blind-end bore (13) of the pressure modulation valve (10) inserted into the accommodating member (14).

7. Hydraulic automotive vehicle brake system with wheel slip control which includes at least one non-return valve (5) with a closure member (1) that is lifted from its valve seat member (2) during evacuation of the brake system, a suction conduit (6) connected to a pump (7) and being in communication with a braking pressure conduit (9) when the closure member (1) of the non-return valve (5) has lifted from the valve seat member (2) during evacuation of the brake system, a braking pressure generator (12) and a wheel brake (8) which are interconnected by way of the braking pressure conduit (9), a pressure modulation valve (10) which, in its closed basic position, isolates the wheel brake (8) from the suction conduit (6) and from a low-pressure accumulator (18) connected to the suction conduit (6) and from the pump (7), wherein the closure member is provided by a sleeve seal (26), and wherein the valve seat member is provided by the annular area of a blind-end bore (13) in an accommodating member (14) that is in contact with the sleeve seal (26),
**characterized in that** the non-return valve (5) is attached in the blind-end bore (13) as an independent assembly unit of a cartridge-type construction, **in that** the cartridge includes a channel (27) which extends until the shoulder of the sleeve seal (26) and is connected to the suction side of the pump (7) by way of an interspace between itself and the pressure modulation valve (10) inserted into the accommodating bore (14).

## Revendications

1. Système de freinage hydraulique de véhicule automobile à régulation du patinage, comportant au moins un clapet de non-retour (5) disposé dans un trou borgne (13) d'un corps de réception (14), dont l'obturateur (1) est soulevé de son corps de siège de clapet (2) pendant la purge du système de freinage, comportant une voie d'aspiration (6) qui est raccordée à une pompe (7) et qui est en liaison avec une voie de pression de freinage (9) lorsque l'obturateur (1) du clapet de non-retour (5) est soulevé du corps de siège de clapet (2) pendant la purge du système de freinage, comportant un transducteur (12) de la pression de freinage et un frein de roue (8) qui sont reliés l'un à l'autre par la voie de pression de freinage (9), comportant une soupape de modulation de pression (10) qui, dans sa position de base fermée, sépare le frein de roue (8) à la fois de la voie d'aspiration (6), d'un accumulateur basse pression (18) raccordé à la voie d'aspiration (6) et de la pompe (7), un élément d'étanchéité (3) élastomère étant disposé entre l'obturateur (1) et le corps de siège de clapet (2), **caractérisé en ce que** le corps de siège de clapet (2) est fixé, par matage, dans le trou borgne (13) qui reçoit le clapet de non-retour (5), **en ce que** l'obturateur (1) est pourvu d'un tenon (15) qui est guidé avec jeu dans un trou (16) de passage (pour le fluide sous pression, ménagé dans le corps de siège de clapet (2) fermant le trou borgne (13), **en ce que** sur l'élément d'écanchéité (3) élastique, en forme de pot, est placé un ressort (4) qui, en position de base fermée du clapet de non-recour (5), maintient l'élément d'étanchéité (3) par sa lèvre d'étanchéité (17) contre une surface d'étanchéité en forme de disque du corps de siège de clapet (2), **en ce que** pour la purge de la voie d'aspiration (6), la lèvre d'étanchéité (17) est soulevée du corps de siège de clapet (2), à l'encontre de l'effet de fermeture du ressort (4) et sous l'action d'une source de vide sur la voie de pression de freinage (9), lorsqu'est atteinte une pression d'ouverture du clapet définie par le ressort (4), et **en ce que** sur l'élément d'étanchéité (3) est prévu un bourrelet (21) qui, en position ouverture du clapet de non-retour (5), règle une distance définie entre la surface frontale du trou borgne (13) et la surface frontale de l'élément d'étanchéité (3), afin de faire agir dans le sens de fermeture du clapet de non-retour (5),la pression hydraulique dans la voie de pression de freinage (9), lorsque le liquide de freinage pénètre dans le trou borgne (13).

2. Système de freinage hydraulique de véhicule automobile selon la revendication 1, **caractérisé en ce que** la voie de pression de freinage (9), qui mène au frein de roue (8), est raccordée à une liaison hydraulique menant au clapet de non-retour (5), entre une soupape de modulation de pression (11) ouverte en position de base et un transducteur de pression de freinage (12).

3. Système de freinage hydraulique de véhicule automobile selon la revendication 1 ou 2, **caractérisé en ce que** le clapet de non-retour (5) est disposé dans le trou borgne (13) du corps de réception (14) qui reçoit une soupape de modulation de pression (10) fermée en position de base.

4. Système de freinage hydraulique de véhicule automobile selon la revendication 3, **caractérisé en ce que** le clapet de non-retour (5) dans une construction en cartouche est fixé dans le trou borgne (13).

5. Système de freinage hydraulique de véhicule automobile selon la revendication 3, **caractérisé en ce que** le clapet de non-retour (5) fait partie intégrante de la soupape de modulation de pression (10).

6. Système de freinage hydraulique de véhicule automobile selon la revendication 1, **caractérisé en ce que** le clapet de non-retour (5) est orienté coaxialement au trou borgne (13) de la soupape de modulation de pression (10) insérée dans le corps de réception (14).

7. Système de freinage hydraulique de véhicule automobile à régulation du patinage, comportant au moins un clapet de non-retour (5) disposé dans un trou borgne (13) d'un corps de réception (14), dont l'obturateur (1) est soulevé de son corps de siège de clapet (2) pendant la purge du système de freinage, comportant une voie d'aspiration (6) qui est raccordée à une pompe (7) et qui est en liaison avec une voie de pression de freinage (9) lorsque l'obturateur (1) du clapet de non-retour (5) est soulevé du corps de siège de clapet (2) pendant la purge du système de freinage, comportant un transducteur (12) de la pression de freinage et un frein de roue (8) qui sont reliés l'un à l'autre par la voie de pression de freinage (9), comportant une soupape de modulation de pression (10) qui, dans sa position de base fermée, sépare le frein de roue (8) à la fois de la voie d'aspiration (6) d'un accumulateur basse pression (18) raccordé à la voie d'aspiration (6) et de la pompe (7), l'obturateur étant formé par un manchon d'étanchéité (26), et le corps de siège de clapet étant formé par la zone annulaire d'un trou borgne (13), en contact avec le manchon d'étanchéité (26), d'un corps de réception (14), **caractérisé en ce que** le clapet de non-retour (5) est fixé en tant qu'ensemble indépendant dans une construction en cartouche, dans le trou borgne (13), **en ce qu'**un canal (27) est prévu qui s'étend jusqu'à l'épaulement du manchon d'étanchéité (26) et qui est relié au côté aspiration de la pompe (7), par un espace intermédiaire entre lui-même et la soupape de modulation de pression (10) insérée dans le trou de réception (14).
